Europäisches Patentamt

European Patent Office

Office européen des brevets

(11) Veröffentlichungsnummer: **0 277 359**
**A1**

# (12) EUROPÄISCHE PATENTANMELDUNG

(21) Anmeldenummer: **87119219.1**

(22) Anmeldetag: **24.12.87**

(51) Int. Cl.4: **C08L 75/04** , C08L 15/02 ,
C09J 3/16 , C09J 3/12 ,
C09D 3/72 , C09D 3/36 ,
//(C08L75/04,15:02,53:02),
(C08L15/02,75:04)

(30) Priorität: 06.01.87 DE 3700194
28.01.87 DE 3702394

(43) Veröffentlichungstag der Anmeldung:
10.08.88 Patentblatt 88/32

(84) Benannte Vertragsstaaten:
DE ES FR GB IT

(71) Anmelder: **BAYER AG**

**D-5090 Leverkusen(DE)**

(72) Erfinder: **Beck, Manfred, Dr.**
**Weberstrasse 11a**
**D-5272 Wipperfürth(DE)**
Erfinder: **Müller-Albrecht, Horst, Dr.**
**Roggendorfstrasse 59**
**D-5000 Köln 80(DE)**
Erfinder: **Königshofen, Heinrich, Dr.**
**Am Mühlenberg 26**
**D-5060 Bergisch-Gladbach 2(DE)**

(54) **Klebstoffmischung.**

(57) Als Klebstoffe Mischungen aus
A) 20 - 99 Gew.-Teilen eines löslichen Polyurethans
B) 0 - 50 Gew.-Teilen eines Vinylaromat/Dien-Blockpolymeren
C) 0,5 - 50 Gew.-Teilen eines modifizierten Vienylaromat/Dien-Polymeren
D) 0 - 10 Gew.-Teilen eines Polyisocyanats gegebenenfalls gelöst in einem organischen Lösungsmittel.

EP 0 277 359 A1

## Klebstoffmischung

Die Verklebung von Gummisohlen mit Polyurethanklebstoffen liefert in vielen Fällen ohne spezielle Vorbehandlung keine zufriedenstellenden Haftwerte. Daher sind zahlreiche Vorschläge zur Verbesserung der Haftung gemacht worden. So wurde in der GB-PS 1 500 296 vorgeschlagen, die Lauffläche von Sohlen vor dem Klebstoffauftrag mit Lösungen von N-Halogenverbindungen einzustreichen (sog. Primern). Derart vorbehandelte Sohlen liefern bei Verwendung von Polyurethanklebstoffen (PU-KR) gute Haftwerte. Von Nachteil ist, daß ein zusätzlicher Arbeitsgang vor der Verklebung erforderlich ist. Es ist ferner bekannt, N-Halogenverbindungen mit dem Klebstoff zur Reaktion zu bringen bzw. Gemische davon als Primer zu verwenden (GB-PS 1 293 842). Auch hier gelten die obengenannten Nachteile. Ein anderer Primer wird in GB-PS 2 048 897 beschrieben, der ein Reaktionsprodukt aus einer N-Halogenverbindung und einem SBS-Blockpolymer ("SBS") darstellt. Auch in diesem Fall enthalten frisch angesetzte Primerlösungen noch N-Halogenverbindung, ferner bleibt die Notwendigkeit eines zusätzlichen Arbeitsganges. Es besteht daher nach wie vor Bedarf an einem Klebstoff, der ohne Anwendung eines Primers zum Verkleben von Sohlen, insbesondere aus thermoplastischen Kautschuken vom Typ SBS oder ähnlichen Produkten geeignet ist. Diese Sohlenmaterialien können wegen ihrer unpolaren Struktur gegenüber PU-Klebstoffen keine ausreichenden Haftkräfte ausbilden. Gegenstand der Erfindung sind als Klebstoffe geeignete Mischungen aus

A) 20 -99, vorzugsweise 60-95, insbesondere 70-90 Gew.-Teilen eines Polyurethans,

B) 0 bis zu 50, vorzugsweise 0,5-30, insbesondere 5-20 Gew.-Teilen eines nicht-halogenierten Vinylaromat/Dien-Blockpolymeren,

C) 0,5-50, vorzugsweise 5-30 Gew.-Teilen eines modifizierten Vinylaromat/Dien-Polymeren und

D) 0 -10 Gew.-Teilen eines Polyisocyanats.

Als Klebstoffe liegen diese Mischungen in Lösungsmitteln vor. Sie liefern ohne Anwendung eines Primers Verklebungen aus SBS-Blockpolymeren (z.B. als Sohlenmaterial) mit sich oder anderen Polymeren mit sowohl in der Anfangshaftung als auch in der Endhaftung guten Werten. Mischungen aus Polyurethanklebstoffen mit Styrol/Butadien-Blockpolymeren allein geben keine brauchbaren Verklebungen. Während frisch hergestellte Mischungen aus dem Polyurethanklebstoff und dem Styrol/Butadien-Blockpolymeren in beispielsweise Methylethylketon zunächst gleichmäßig trübe erscheinen, beginnen sich nach wenigen Stunden zwei Phasen auszubilden, deren Anteile vom Mischungsverhältnis der Komponenten abhängt. Mischungen aus Polyurethan (PU) und eine partiell modifizierten SBSm in einem Lösungsmittel stellen dagegen klare Lösungen dar, die monatelang unverändert bleiben, die aber, wie nachgewiesen wurde, keine brauchbaren Haftwerte liefern. Fügt man zu der oben beschriebenen instabilen Zweiermischung aus PU und SBS das modifizierte SBS hinzu, erhält man überraschenderweise zwar trübe, aber dauerhaft stabile Mischungen. Die Trübe wird durch sehr kleine gleichmäßig verteilte Partikel verursacht, die keine Tendenz zur Sedimentation zeigen. Solche Dreiermischungen sind monatelang stabil und entsprechen der Forderung nach einem sedimentationsstabilen Klebstoff, der ein hohes Haftwerte-Niveau liefert. Zum gleichen Ergebnis gelangt man bei Verwendung eines hochmodifizierten SBS (Zweiermischung aus A und C), wobei Komponente C derart gebaut ist, daß mindestens 1,5 Mol, vorzugsweise 1,8 - 2,3 Mol Modifizierungsmittel auf 1 Mol Butadieneinheit kommen.

Bei der für die erfindungsgemäßen Mischungen geeigneten Komponente (A) handelt es sich z.B. um weitgehend lineare, endständige Hydroxylgruppen aufweisende, lösliche oder schmelzbare Polyurethane. Die Anwendung dieser Werkstoffe zum Verkleben verschiedener Substrate ist bekannt. Ihre Herstellung ist beispielsweise in den DE-PS 1 256 822, 1 930 336 oder 2 161 340 beschrieben. Es handelt sich um auf Basis kristalliner Dihydroxypolyester vom Molekulargewicht 800-4000 unter Verwendung von Kettenverlängerungsmitteln und Diisocyanaten aufgebaute Polyurethan. Gleichermaßen verwendbar sind Polyesterpolyurethanee, in denen die Polyesterkomponente aus eine Mischung verschiedener Alkohole hergestellt wurde (DE-OS 3 502 379). Solche Polyurethane haben ein günstiges Wärmeaktivierverhalten. Nähere Angaben über Polyesterkomponenten und deren Mengenverhältnisse, über die Diolkomponenten sowie über die Diisocyanatkomponenten sind in den obengenannten Patentschriften ausführlich gemacht. Die Zusammensetzung der Komponente A in den beanspruchten Mischungen ist jedoch nicht nur auf die genannten Polyurethane beschränkt. Möglich ist auch die Anwendung von Polyether-oder Polyetheresterdiole enthaltenden Reaktionsprodukten mit Polyisocyanaten. Auch analoge Polyurethane, deren Polyesterkompoente ein Polycarbonat ist, oder in denen Polycarbonatgruppen neben Carbonsäureestergruppen vorliegen, sind möglich. Ferner können auch Polyester verwendet werden, in denen die Säurekomponente eine Mischung aus verschiedenen Carbonsäuren ist. Außer Polyestern auf Basis von C4-Diolen lassen sich auch solche einsetzen, die aus C2-und/oder C3-Diolen bzw. Gemischen daraus mit C4-Diolen hergestellt wurden.

Bevorzugt sind die Verfahrensprodukte nach den DE-PS 1 256 822, 1 930 336 und 2 161 430 sowie nach der DE-OS 3 502 379.

Die Polyurethane A besitzen im allgemeinen eine Viskosität (15 gew.-%ig gelöst in Methylethylketon) von 0,1 - 4, vorzugsweise von 0,2 - 2 Pa.s (Brookfield-Viskosimeter, Spindel 3, 60 Upm, 23°C).

Die Blockpolymeren (B) enthalten mindestens einen Block aus polymerisierten vinylaromatischen Verbindungen, wie Styrol, Vinyltoluol, α-Methylstyrol, Vinylnaphthalin und in besonderen Fällen auch zusätzlich kleine Mengen von Divinylverbindungen wie Divinylbenzol. Bevorzugt sind Styrol und α-Methylstyrol, besonders bevorzugt ist Styrol. Das Polymerisat dieser Monomeren bildet den sogenannten harten Block (auch als "S" für Styrol bezeichnet).

Der Dienblock enthält als polymerisierte Diene bevorzugt 1.3-Diene mit 4 bis 6 C-Atomen. Beispiele hierfür sind 1.3-Butadien, Isopren, 2.3-Dimethyl-1.3-butadien. Bevorzugt sind Butadien und Isopren, besonders bevorzugt ist Butadien. Der Dienblock wird deshalb auch mit "B" (für Butadien) bezeichnet. Es handelt sich hier um den sogenannten Wiechblock.

Die Blockpolymeren B enthalten im Mittel 4 - 500, vorzugsweise 100 - 250, S-Einheiten und 10 - 4.000, vorzugsweise 100 - 1.000, B-Einheiten pro Molekül. Der S-Gehalt beträgt im allgemeinen 10 bis 95, vorzugsweise 40 - 90 Gew.-%, bezogen auf B. Die Blockpolymeren B besitzen vorzugsweise eine Intrinsic-Viskosität von 0,3 - 3, insbesondere von 0,5 - 1,8, dl/g (gemessen bei einer Kon zentration von 5 g/l Toluol bei 25°C).

Die Blockpolymeren können in bekannter Weise durch anionische Polymerisation in flüssigen Kohlenwasserstoffen als Lösungsmittel hergestellt werden. Die Struktur der hierbei erhältlichen Blockpolymeren kann sehr vielfältig sein. Im einfachsten Fall handelt es sich um Blockpolymere vom Typ S-B. Eine Abwandlung hiervon sind die Blockpolymeren mit Übergangsblöcken (tapered structures) symbolisiert durch S-SB-B, worin SB einen sich in der Zusammensetzung von "styrolreich" bis "butadienreich" kontinuierlich ändernden Block darstellt. Sie entstehen bei der gleichzeitigen Polymerisation beider Monomeren. Durch Kopplung von lebenden Blockpolymeren können Strukturen der Form S-B-S oder mit mehrfunktionellen Kopplern $(SB)_nK$ entstehen, worin K das Kopplermolekül und n dessen Kopplungswertigkeit symbolisieren. Möglich ist auch die Herstellung von Blockpolymeren durch abwechselnde Zugabe von Monomeren, wobei Blockpolymere vom Typ $(SB)_n$-S gebildet werden. Möglich ist ferner auch die Herstellung von Polymeren mit endständigen Dienblöcken. Ferner kann man durch abwechselnde Kombination der getrennten und der gemeinsamen Zugabe der Monomeren weitere Strukturvarianten herstellen. Dem Fachmann ist weiter bekannt, daß durch Wahl der Reaktionstemperatur und des Lösungsmittels die Struktur der Blockpolymeren (Vinylgehalt der Dienkomponente, statistische Verteilung der Monomeren) beeinflußt werden kann. Ferner können durch Zugabe geringer Mengen Divinylbenzol zusätzliche Verzweigungen eingebaut werden. Eine weitere Variable ist das Mengenverhältnis der Monomeren.

Möglich ist auch die Verwendung von Monomergemischen zum Aufbau der harten und der weichen Blöcke, beispielsweise Styrol und α-Methylstyrol oder Butadien und Isopren, wobei die Polymeren dieser Monomeren getrennte Blöcke darstellen können.

Weitere Typen, die insbesondere zur Herstellung der nachstehend beschriebenen modifizierten Komponente (C) eingesetzt werden können, sind Styrol-gepfropfte SB-Blockpolymere.

Das modifizierte Vinylaromat/Dien-Polymer (C) wird erhalten durch eine Halogenierungsreaktion an der Polybutadienkomponente eines Vinylaromat/Dien-Polymeren, im folgenden auch S/B-Copolymer genannt. Als Polymere für die Modifizierung können alle oben zu (B) genannten Blockpolymeren eingesetzt werden. Möglich ist auch die Verwendung von statistischen Vinylaromat/Dien-Copolymeren. Unter Halogenierungsreaktionen sind die an olefinisch ungesättigten oder an allylischen Gruppen durchführbaren Reaktionen zu verstehen, die zu Einführung von Halogen und gegebenenfalls zusätzlich OH bzw. =O führen. Diese Verfahren sind bekannt. Als einige Beispiele hierfür seien genannt: die Halogenierung mit elementarem Halogen, bevorzugt mit Chlor, die Alkoxichlorierung durch kombinierte Einwirkung von Chlor in Gegenwart von Alkoholen, die Hydroxihalogenierung mit Alkalimetallhypohalogenit, ferner die Umsetzung mit organischen Hypochloriten, z.B. tert.-Butylhypochlorit, welche zur Ausbildung von Chlorhydrinen führt. Eine weitere Methode ist die Anwendung von N-Halogenverbindung. Beispiele hierfür sind N,N-Dichlordimethylhydantoin, Trichlorisocyanursäure, Dichlorglykoluril, Chloramin T, Na-Dichlorisocyanurat, N-Bromsuccinimid. Brauchbar ist auch die Methode der Dichlorcarbenreaktion mit den Doppelbindungen der Butadieneinheiten. Die erhaltenen Produkte lassen sich durch ihren Halogengehalt charakterisieren.

Bei Komponente C bedeutet im Sinne der Erfindung "modifiziert" in der Regel 0,03 - 2,3 Mol Modifizierungsmittel pro Mol Butadieneinheiten.

Die untere Grenze des Halogengehalts liegt bei etwa 1 Gew.-%. Die obere Grenze ist festgelegt durch den Diengehalt des S/B-Polymeren. Sie ist erreicht bei vollständiger Sättigung der Doppelbindungen. Der

3

tatsächlich erreichte Halogengehalt hängt ab von der Art der Halogenierung (z.B. Chlorierung, Hydroxychlorierung, Dichlorcarbenylierung). In besonderen Fällen können auch zusätzlich Allyl-ständige H-Atome durch Halogen ersetzt, oder nach Abspaltung von HCl neu enstandene Doppelbindungen abermals chloriert sein. Die Produkte können auch aufgrund von oxidativen Prozessen zusätzlich geringere Anteile an Carbonylgruppen enthalten.

Die Mischungen aus den Komponenten A, B und C können sowohl unverdünnt als auch unter Verwendung eines Lösungs-bzw. Quellungsmittels angewendet werden. Im ersteren Falle ist eine Anwendung aus der Schmelze, im anderen, bevorzugten Falle die Anwendung durch Auftragen der Lösung und Verdunsten des Lösungsmittels möglich. Als Lösungsmittel kommen niedrigsiedende Flüssigkeiten in Frage. Bevorzugt eignen sich aromatische und cycloaliphatische Kohlenwasserstoffe und Alkohole. Besonders bevorzugt sind Ketone wie Butanon, Aceton, Ester wie Ethylacetat, Methylenchlorid und Toluol. Häufig sind besonders günstig Gemische der obengenannten Lösungsmittel.

Die Lösung der erfindungsgemäßen Mischungen in den Lösungsmitteln kann auf üblichem Wege hergestellt werden, wobei durch Versuch leicht zu ermitteln ist, in welcher Reihenfolge die Bestandteile gelöst werden müssen. Die erfindungsgemäßen Mischungen können die üblichen bekannten Stabilisatoren enthalten, beispielsweise zur Stabilisierung der Komponente B ein phenolisches Antioxidans sowie für Komponente C Stabilisatoren gegen Dehydrohalogenierung, wie Epoxide.

Ferner können die Mischungen auch Füllstoffe, Farbstoffe und weitere Polymere enthalten. Zur Erreichung spezieller Eigenschaften können den Mischungen natürliche oder synthetische Harze wie Phenolharze, Ketonharze, Kolophoniumderivate, Phthalatharze, Acetyl-oder Nitrocellulose zugefügt werden.

Den Mischungen der Komponenten A-C können als Komponente (D) gegebenenfalls Polyisocyanate kurz vor dem Gebrauch zugemischt werden, um die Wärmefestigkeit der Verklebungen zu verbessern. Typische Beispiele hierfür sind Diisocyanate und Triisocyanate. Bevorzugt sind Triisocyanate, z.B. Triphenylmethantriisocyanat oder Thiophosphorsäure-tris-(p-isocyanatophenylester).

## Beschreibung der Klebstoffkomponenten

Nachstehend sind die Komponenten der Mischungen charakterisiert.

PU 1: gering kristallisierendes Polyesterpolyurethan von hoher Thermoplastizität. Lösungsviskosität in Methylethylketon (MEK, 15 Gew.-%) = 0,2 ± 0,1 Pa.s (Brookfield, Spindel 3, 60 Upm, 23°C) (®Desmocoll 110 der Bayer AG).

PU 2: stark kristallisierendes Polyesterpolyurethan von hoher Thermoplastizität mit einer Lösungsviskosität (in MEK, 15 Gew.-%) von 0,6 ± 0,2 Pa.s (®Desmocoll 400).

PU 3: sehr stark kristallisierendes Polyesterpolyurethan von mittlerer Thermoplastizität mit einer Lösungsviskosität (in MEK, 15 Gew.-%) von 1,2 ± 0,2 Pa.s (®Desmocoll 510 S).

PU 4: sehr stark kristallisierendes Polyesterpolyurethan von geringer Thermoplastizität mit einer Lösungsviskosität (in MEK, 15 Gew.-%) von 1,2 ± 0,2 Pa.s (®Desmocoll 530).

PU 5: hochkristallines Polyesterpolyurethan durchschnittlicher Thermoplastizität mit einer Lösungsviskosität (in MEK, 15 Gew.-%) von 1,8 ± 0,3 Pa.s (®Desmocoll 540).

SB 1: Styrol/Butadien-Blockpolymer vom Typ SBS, Butadiengehalt 64 Gew.-%, Grenzviskosität $[\eta]$ = 79 cm$^3$/g in CH$_2$Cl$_2$ (®Cariflex 1102 der Shell AG).

4

SB 2: Styrol/Butadien-Blockpolymer vom Typ SBS mit Übergangsblöcken (tapered structure) und einem Butadiengehalt von 25 Gew.-%; Grenzviskosität $[\eta]$ = 80 cm³/g in Toluol (®Stereon 872 A von Firestone).

SB 3: SB-Blockpolymer mit 20 Gew.-% Butadien $T_g$ -80 C° , MFI (10 kg/200°C) = 87°C, Vicat B = 56°C (®Styrolux der BASF)

Polyisocyanat A: Thiophosphorsäure-tris-(p-isocyanatophenylester), Lösung in Methylenchlorid, NCO-Gehalt 5,4 ± 0,2 Gew.-%.

## Ausführung der Verklebungen

Unter Verwendung der nachstehend beschriebenen 20 gew.-%igen Klebstofflösungen wurden Verklebungen von Weich-PVC (45 Gew.-% Dioctylphthalat) mit einem gefüllten Sohlenmaterial auf Basis von Styrol/Butadien-Blockpolymeren ausgeführt. Nach dem Auftragen auf Streifen von 15×3 cm ließ man beide Seiten 30 Minuten ablüften und unterzog dann die Probe mit dem thermoplastischen Kautschuk 4 Sekunden einer Schockaktivierung mit Hilfe eines IR-Strahlers (Funck-Aktiviergerät Typ A 1000).

Sofort danach wurden die Prüfkörper aufeinandergelegt und innerhalb von 10 Sekunden in einer Presse bei Raumtemperatur und einem Druck von 0,4 MPa 10 Sekunden lang verpreßt.

Sofort danach (innerhalb von 30 Sekunden) wurde die erste Prüfung auf Schälfestigkeit in einer Zerreiß maschine ausgeführt (Sofortwert, Abzugsgeschwindigkeit 100 mm/Min.). Eine weitere Prüfung erfolgte nach 1 Tag, eine weitere nach 9 Tagen. Eine Variante bestand darin, daß unmittelbar vor dem Klebstoffauftrag der Lösung 5 phr Polyisocyanat A zugefügt wurden. Die Ergebnisse sind jeweils gekennzeichnet durch "ohne" bzw. "mit" Isocyanat".

## Beispiel A

Modifiziertes (halogeniertes) Styrol/Butadien-Blockpolymer

300 g SB 2 wurden in 2,600 ml Methylenchlorid gelöst. Bei 40°C leitete man im Verlauf von 5 Stunden 120 g Chlorgas ein. Die Aufarbeitung der Lösung des modifizierten Blockpolymeren erfolgte entweder durch Ausfällen mit Methanol oder durch Strippen (Zutropfen der Lösung in heißes Wasser). Zur Stabilisierung gab man vorher einen Epoxidstabilisator zu. Chlorgehalt 21 - 23 Gew.-%.

## Beispiel B

Modifizierung von SB 2 mit Na-Hypochloritlösung

40 g SB 2 wurden unter Rühren in 360 ml Methylenchlorid gelöst. Man fügte 0,5 g eines Phasentransferkatalysators zu und tropfte 50 g einer 15 gew.-%igen wäßrigen Na-Hypochloritlösung zu. Danach wurden noch 1,5 ml Triethylamin zugegeben. Dann erwärmte man auf 40°C und ließ 4 Stunden unter Rühren reagieren. Die organische Lösung wurde mittels Wasserdampf gestrippt und das ausgefallene Produkt im Vakuum bei 60°C getrocknet. Chlorgehalt 1,9 Gew.-%.

## Beispiel C

Zu einer 7,4 gew.-%igen Lösung von SB 2 in Chloroform, die 30 g SB 2 enthielt, gab man 1 g Tricaprylylmethyl ammoniumchlorid und tropfte bei maximal 50°C 80 ml einer 50 gew.-%igen wäßrigen KOH-Lösung zu. Danach schüttelte man die organische Phase 2 mal mit destilliertem Wasser aus und fällte das Polymer durch Eingießen in Methanol aus. Nach abermaligem Umfällen zeigte das Produkt einen Chlorgehalt von 9,9 Gew.-%.

### Beispiel D

20 g SB 2 wurden in 335 g Methylethylketon gelöst. Zu dieser Lösung tropfte man unter Rühren bei Raumtemperatur eine Lösung aus 5 g Trichlorisocyanursäure in 45 g Methylethylketon. Nach 5 Stunden wurde die Lösung, die sehr viel kleine Gelteilchen enthielt, zur Herstellung einer Klebstofflösung eingesetzt.

### Beispiel E

8 g SB 2 und 1,0 g p-Toluolsulfonsäureamid wurden in 280 g Methylethylketon gelöst. Zu dieser Lösung tropfte man bei Raumtemperatur 2,0 g Trichlorisocyanursäure, gelöst in 40 g Methylethylketon, langsam zu. Nach 5 Stunden Rühren wurde das modifizierte SBS zur Herstellung einer Klebstoffmischung eingesetzt.

### Beispiel F

Zu einer Lösung von 15 g PU 3 in 85 g Methylethylketon tropfte man unter Rühren bei Raumtemperatur 12,6 g Trichlorisocyanursäure in 40 ml Methylethylketon langsam zu. 10,8 g der erhaltenen Lösung ließ man zu einer Lö sung von 4 g SB 2 in 195 ml Methylethylketon zulaufen. Man erwärmte 5 Stunden bei 30 - 40°C und setzte dann das modifizierte SBS zur Herstellung eines Klebstoffes ein. Durch Isolierung der Reaktionsprodukte konnte mittels IR-spektrum gezeigt werden, daß in der ersten Stufe eine N-Chlorverbindung aus PU 3 entsteht, die das SB 2 chlorriert. Man erhält somit eine Mischung aus PU 3 und modifiziertem SBS.

### Beispiel G

Zu einer Lösung von 30 g SB 3 in 345 g Methylenchlorid leitete man bei 40°C im Verlauf einer halben Stunden 10 g Chlorgas ein. Man spülte das System mit Stickstoff aus, fügte 0,3 g Diglycidylether des Bispenol A zu und fällte das Produkt durch Einlaufenlassen der Lösung in Methanol aus. Trocknung i.Vak. bei 50°C, Chlorgehalt 21,8 Gew.-%.

### Beispiel 1

80 Gew.-Tle. PU 3, 10 Gew.-Tle. SB 1 und 10 Gew.-Tle. des nach Beispiel A hergestellten modifizierten S/B-Polymeren wurden in soviel Methylethylketon (MEK) gelöst, daß eine Mischung mit 20 Gew.-% Feststoffgehalt entstand. Analog wurden Mischung gemäß den Angaben der Tabelle 1 hergestellt und damit Verklebungen von PVC mit dem thermoplastischen Sohlenmaterial ausgeführt. Die Ergebnisse der Schälfestigkeitsprüfungen sind in Tabelle 1 zusammengestellt. Zum Vergleich wurden Verklebungen mit 100 % PU 3, mit Mischungen aus PU 3 plus SB 1 und mit Mischungen aus PU 3 plus modifiziertem S/B-Polymer nach Beispiel A ausgeführt. Die Ergebnisse zeigen eindeutig, daß lediglich die beanspruchten Mischungen sowohl in den Sofortfestigkeiten als auch in den Endfestigkeiten die von der DIN-Norm geforderten Werte (sofort: >1, nach 9 Tagen: >5 N/mm) ergeben.

**Tabelle 1:**

Schälfestigkeiten von 2-Komponentigen und 3-Komponentigen Mischungen auf Basis PU 3, Substrat PVC gegen TR-Sohlenmaterial

| Komponente 1) | | | Schälfestigkeit (N/mm) | | | | | |
| --- | --- | --- | --- | --- | --- | --- | --- | --- |
| | | | ohne Isocyanat | | | mit Isocyanat | | |
| A | B | C | sofort | 1 Tag | 9 Tage | sofort | 1 Tag | 9 Tage |
| A 50 | 30 | 20 | 1,0 | 3,2 | 4,0 | 1,2 | 4,6 | 5,3 |
| B 80 | 10 | 10 | 1,7 | 5,3 | 6,0 | 1,7 | 6,0 | 6,0 |
| C 90 | 5 | 5 | 1,9 | 4,3 | 5,0 | 1,5 | 4,7 | 5,6 |
| D 95 | 2,5 | 2,5 | 1,1 | 3,8 | 4,9 | 1,1 | 4,1 | 5,0 |
| E 100 | - | - | 0,2 | 0,4 | 0,5 | 0,8 | 0,5 | 0,5 |
| F 95 | 5 | - | 1,0 | 0,4 | 0,7 | 1,2 | 1,2 | 1,8 |
| G 90 | 10 | - | 0,5 | 0,8 | 1,8 | 0,5 | 0,7 | 3,7 |
| H 85 | 15 | - | 0,4 | 0,4 | 1,0 | 0,3 | 0,5 | 0,7 |
| J 70 | - | 30 | 1,4 | 2,1 | 2,4 | 1,4 | 1,7 | 1,5 |
| K 80 | - | 20 | 1,4 | 1,7 | 2,4 | 1,2 | 2,4 | 2,6 |
| L 90 | - | 10 | 1,4 | 2,1 | 2,0 | 1,6 | 2,6 | 3,0 |

1) A = PU 3; B = modifiziertes SB nach Beispiel A; C = SB 1

Lagerstabilität der Mischungen (Lösungsmittel Methylethylketon)

Die beanspruchten Mischungen sind über Monate stabil. Es handelt sich um ein trübe aussehendes 2-Phasensystem, das im Kontinuum fein verteilt Partikel enthält, die keine Tendenz zur Sedimentation zeigen. Mischung aus den Komponenten A und B sehen als Lösung klar aus und zeigen keine Entmischungserscheinung.

Beispiel 2

Die Variation des Typs der Polyurethan-Komponente zeigt, daß das Prinzip der Dreiermischung breit anwendbar ist. Es lassen sich sowohl sehr stark kristallisierende Polyesterpolyurethane mit verschieden ausgeprägter Thermoplastizität und hoher Viskosität als auch solche mit niedriger Lösungsviskosität verwenden. Tabelle 2 gibt einen Überblick.

## Tabelle 2

| PU[1] | Komponente[2] | | Schälfestigkeit | | | | | |
|---|---|---|---|---|---|---|---|---|
| | | | ohne Isocyanat | | | mit Isocyanat | | |
| | B | C | sofort | 1 Tag | 9 Tage | sofort | 1 Tag | 9 Tage |
| PU 2 | 10 | 10 | 0,9 | 4,8 | 5,2 | 0,9 | 3,8 | 5,0 |
| PU 3 | 10 | 10 | 2,0 | 5,3 | 6,0 | 2,6 | 5,1 | 5,7 |
| PU 4 | 10 | 10 | 2,8 | 4,2 | 5,3 | 2,9 | 4,5 | 7,5 |
| PU 5 | 10 | 10 | 1,8 | 3,7 | 4,1 | 2,2 | 4,9 | 5,2 |

1) Jeweils 80 Gew.-Tle.

2) C = nach Beispiel A hergestelltes modifiziertes SB-Polymer;

   B = SB 1

Beispiel 3 (Vergleich)

Zum Vergleich wurden als modifizierte Polymere nachstehende halogenierte Polymere untersucht. Hierzu wurden 80 Gew.-Tle. PU 3, 10 Gew.-Tle. SB 1 und jeweils 10 Gew.-Tle. der in Tabelle 3 genannten Polymeren in Methylethylketon unter Bildung einer 20 Gew.-%igen Klebstofflösung gelöst. Die Ergebnisse zeigen, daß keines dieser Polymeren mit den modifizierten S/B-Polymeren vergleichbar ist.

### Tabelle 3:

Klebstoffmischungen unter Verwendung von sonstigen halogenierten Polymeren.

| halogen. Polymer[1] | Schälfestigkeit (N/mm) mit Isocyanat | | |
| --- | --- | --- | --- |
| | sofort | 1 Tag | 9 Tage |
| Pergut S 10 | 1,3 | 2,1 | 2,3 |
| Pergut S 40 | 0,7 | 2,8 | 2,9 |
| Pergut S 90 | 0,8 | 2,2 | 2,2 |
| Hypalon 40 | 0,3 | 1,7 | 1,9 |
| Bayer CM 4230 | 0,4 | 1,1 | 1,4 |
| Baypren 210 | 0,5 | 1,3 | 1,5 |
| Baypren, mod. [2] | 0,3 | 1,0 | 1,4 |

1)  Klebstoffmischung: 80 Gew.-Tle. PU 3, 10 Gew.-Tle. SB 1 und 10 Gew.-Tle. halogeniertes Polymer; Feststoffgehalt 20 Gew.-%.

2)  ®Baypren 210 in Gegenwart von Ethanol chloriert, Chlorgehalt = 44,9 Gew.-%.

Beispiel 4

In diesem Beispiel soll gezeigt werden, daß auch Zusätze von sonstigen Polymeren zu der Dreikomponenten-Mischung aus Polyurethan, SBS-Blockpolymer und modifiziertem SB-Polymer möglich sind. So liefert beispielsweise eine Mischung aus 80 Gew.-Tln. PU 3, 7,5 Gew.-Tln. SB 1, 7,5 Gew.-Tln. chlorietem SB 2 (Cl-Gehalt 23,0 Gew.-%) und 5 Gew.-Tln. ®Plexigum M 319 (einem Copolymer aus Methyl- und Ethylmethacrylat) Sofortwerte von 2,0 N/mm und Endwerte (9 Tage) von 6,6 N/mm (mit Isocyanatzusatz). Eine ähnliche Mischung aus 75, 10, 10 und 5 Gew.-Tln. wie oben, gab 1,4 bzw. 5,0 N/mm sofort bzw. nach 9 Tagen. Ohne Isocyanat lag der Endwert bei 5,0 N/mm.

Beispiel 5

Eine Klebstoffmischung wurde hergestellt aus 50 Gew.-Tln. PU 3, 20 Gew.-Tln. SB 2 und 30 Gew.-Tln. eines nach Beispiel B hergestellten chlorierten S/B-Polymeren (Chlorgehalt = 1,9 Gew.-%), wobei wäßrige Hypochloritlösung verwendet wurde. Die Schälfestigkeiten betrugen:

|  | mit Isocyanat | |
| --- | --- | --- |
| sofort | 1 Tag | 9 Tage |
| 1,3 | 3,5 | 4,8 |

Die Ergebnisse zeigen, daß auch ein modifiziertes SBS-Polymer mit sehr niedrigem Chlorgehalt eine brauchbare Klebstoffmischung liefert. Ferner zeigt das Beispiel, daß auch andere unmodifizierte SB-Blockpolymere als SB 1 eingesetzt werden können. Während SB 1 ein lineares Polymer vom SBS-Typ mit scharfen Blockübergängen ist, liegen im SB 2 zwischen den Styrol-und den Butadienblöcken Übergangsblöcke mit sich verändernder Zusammensetzung vor (tapered blocks); außerdem ist der Styrolanteil im SB 2 deutlich höher als in SB 1 (75 % gegen 33 %).

Beispiel 6

Aus jeweils 10 Gew.-Tln. (Feststoff) nach den Beispielen D und E erhaltenen modifizierten SBS-Blockpolymeren wurden unter Zusatz von PU 3 (80 Gew.-Tle.) und SB 1 (10 Gew.-Tle.) 20 gew.-%ige Lösungen in Butanon hergestellt. Analog Beispiel 1 stellt man Verklebungen her. Die Schälfestigkeiten von Verklebungen aus der beanspruchten Mischung entsprechen den Forderungen der DIN-Norm (Tabelle 4).

Tabelle 4:

Ergebnisse der Verklebungen mit nach den Beispielen D und E erhaltenen modifiziertem SB-Blockpolymer

| mod. SBS | | mit Isocyanat | | |
| --- | --- | --- | --- | --- |
| n. Bsp. | | sofort | 1 Tag | 9 Tage |
| 6A | D | 1,8 | 4,2 | 5,0 |
| 6B | E | 1,1 | 4,0 | 5,9 |

Beispiel 7

Zu der nach Beispiel F erhaltenen Lösung wurden 32 g PU 3 und 4 g SB 1 gegeben und unter Rühren gelöst. Die 20 gew.-%ige Lösung setzte man wie in Beispiel 1 zu Verklebungen ein.

| Schälfestigkeit (N/mm) | sofort | 1 Tag | 9 Tage |
| --- | --- | --- | --- |
| | 1,0 | 2,5 | 4,4 |

Beispiele 8 A - C (Vergleich)

Diese Beispiele zeigen, daß die modifizierten SBS-Polymeren, lediglich als Primer eingesetzt, keine brauchbaren Klebungen liefern (8 A). Auch Mischungen eines modifizierten SBS-Polymers mit SB 1 (Verhältnis 1:1) als Primer verwendet, lieferten ebenfalls negative Ergebnisse (8 B). Zum Vergleich wurde - schließlich noch unmodifiziertes SBS als Primer in die Untersuchung einbezogen (8 C).

Haftfestigkeiten von Verklebungen mit PU 3-Lösung an TR-Sohlenoberflächen gegen PVC, die mit den oben genannten Mischungen geprimert wurden:

| Bei-spiel | Primer [1] | Schälfestigkeit mit Isocyanat | | |
|---|---|---|---|---|
| | | sofort | 1 Tag | 9 Tage |
| 8 A | mod. SBS nach Bei-spiel A | 0,8 | 0,8 | 3,8 |
| 8 B | Mischung SB 1/SBS nach Bsp. A (1:1) | 0,6 | 1,6 | 3,4 |
| 8 C | SB 2 | 0,7 | 0,4 | 3,6 |

[1] Primerauftrag 1 Std. alt

Beispiel 9

Analog Beispiel 1 wurden Mischungen aus 80 Gew.-Tln. PU 3, 10 Gew.-Tln. SB 1 und 10 Gew.-Tln. des nach Beispiel G hergestellten modifizierten S/B-Polymeren in MEK hergestellt. Die Schälfestigkeiten betrugen:

| Beispiel | ohne Isocyanat | | | mit Isocyanat | | |
|---|---|---|---|---|---|---|
| | sofort | 1 Tag | 9 Tage | sofort | 1 Tag | 9 Tage |
| 9 | 2,3 | 3,8 | 5,0 | 2,0 | 6,2 | 6,7 |

**Ansprüche**

1. Mischungen aus
   A) 20 - 99 Gew.-Teilen eines löslichen Polyurethans,
   B) 0 bis zu 50 Gew.-Teilen eines nicht-halogenierten Vinylaromat/Dien-Blockpolymeren,
   C) 0,5 - 50 Gew.-Teilen eines modifizierten Vinylaromat/Dien-Polymeren und
   D) 0 - 10 Gew.-Teilen eines Polyisocyanats,
   gegebenenfalls gelöst in einem organischen Lösungsmittel.
2. Mischung nach Anspruch 1, in denen die Komponente C ein durch Halogenierung eines Vinylaromat/Dien-Polymeren erhaltenes Polymer darstellt.

3. Mischungen nach den Ansprüchen 1 und 2, in denen die komponente C ein durch Chlorierung eines Styrol/Butadien-Blockpolymeren erhaltenes Polymer darstellt.

4. Verwendung von Mischungen nach den Ansprüchen 1 bis 3 zur Verbindung von Teilen aus Gummi, Leder oder Kunststoffen.

5. Verwendung von Mischungen gemäß Anspruch 4 zur Verklebung von Teilen aus Styrol/Butadien-Blockpolymeren und Gummi oder Leder.

6. Verwendung von Mischungen nach Anspruch 4, in denen zusätzlich ein Polyisocyanat enthalten ist.

7. Verwendung von Mischungen nach Anspruch 1 zur Beschichtung von Teilen aus Gummi, Leder oder Kunststoffen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 917 742 (J.T. HARLAN) <br> * Ansprüche 1,2,4; Spalte 1, Zeilen 46-54; Spalte 2, Zeilen 41-67; Spalte 4, Zeilen 18-46 * <br> --- | 1-5 | C 08 L 75/04 <br> C 08 L 15/02 <br> C 09 J 3/16 <br> C 09 J 3/12 |
| X | US-A-4 007 311 (J.T. HARLAN) <br> * Ansprüche 1-4,8; Spalte 2, Zeilen 13-55; Spalte 3, Zeilen 22-58 * <br> --- | 1-5 | C 09 D 3/72 <br> C 09 D 3/36 // <br> (C 08 L 75/04 <br> C 08 L 15:02 |
| X | FR-A-2 259 146 (STAMICARBON) <br> * Ansprüche 1-3,11,13-16; Seite 4, Zeilen 12-17; Seite 5, Zeilen 1-31; Seite 7, Zeilen 7-17 * <br> --- | 1,6 | C 08 L 53:02 ) <br> (C 08 L 15/02 <br> C 08 L 75:04 ) |
| X | DE-A-2 362 287 (STAMICARBON) <br> * Ansprüche 1,8,10,11,14,15; Seite 4, Absätze 2-4 * <br> --- | 1,2,4 | |
| X | DE-A-1 913 683 (SHELL) <br> * Ansprüche 1,3,4,6-11; Seite 11, Absatz 2 * <br> ----- | 1-3 | |
| | | | **RECHERCHIERTE SACHGEBIETE (Int. Cl.4)** <br> C 08 L <br> C 09 J <br> C 09 D |

Der vorliegende Recherchenbericht wurde für alle Patentansprüche erstellt

| Recherchenort | Abschlußdatum der Recherche | Prüfer |
|---|---|---|
| DEN HAAG | 03-05-1988 | VAN PUYMBROECK M.A. |